# EUROPEAN PATENT SPECIFICATION

(11) **EP 4 328 765 B1**
(45) Date of publication and mention of the grant of the patent: **30.09.2026**
(21) Application number: 22794496.4
(22) Date of filing: 31.03.2022
(51) Int. Cl.: G06F 16/9535, G06F 16/23, G06F 8/65, B60W 50/14

(54) **METHOD AND APPARATUS FOR RECOMMENDING VEHICLE DRIVING STRATEGY**
VERFAHREN UND VORRICHTUNG ZUR EMPFEHLUNG EINER FAHRZEUGFAHRSTRATEGIE
PROCÉDÉ ET APPAREIL POUR RECOMMANDER UNE STRATÉGIE DE CONDUITE DE VÉHICULE

(30) Priority: 26.04.2021 CN 202110454338
(43) Date of publication of application: 28.02.2024
(73) Proprietor: Huawei Technologies Co., Ltd., Longgang Shenzhen, Guangdong 518129 (CN)
(72) Inventor: XU, Jingjin, Shenzhen, Guangdong 518129 (CN); QI, Qi, Shenzhen, Guangdong 518129 (CN)
(74) Representative: MERH-IP Matias Erny Reichl Hoffmann Patentanwälte PartG mbB
(86) International application number: PCT/CN2022/084442
(87) International publication number: WO 2022/228024

(56) References cited:
- EP-A1- 3 363 706
- CN-A- 111 152 790
- CN-A- 111 152 790
- CN-A- 111 605 555
- CN-A- 112 477 878
- DE-A1- 102013 217 552
- US-A1- 2015 317 337
- US-A1- 2017 267 252
- US-A1- 2019 322 290
- US-A1- 2020 211 719

## Description

### TECHNICAL FIELD

This application relates to the field of intelligent vehicles, and in particular, to a vehicle driving policy recommendation method and apparatus based on a driving scenario.

### BACKGROUND

Conventional vehicles are driven by drivers. However, with the progress of science and technology, the artificial intelligence (artificial intelligence, AI) technology is gradually improving. Currently, the concept of "autonomous vehicle" is proposed based on AI, and autonomous vehicles are also known as future vehicles. However, a current vehicle still cannot implement full-autonomous driving in all scenarios, and can implement autonomous driving only in some specific scenarios. Each autonomous driving scenario corresponds to one autonomous driving policy. The autonomous driving policy may also be considered as a new function of the autonomous vehicle, for example, an autonomous parking policy for a parking scenario or a low-speed cruising policy for a traffic jam scenario.

An in-vehicle driving assistance system is a system loaded on a vehicle, and is usually updated by a vehicle manufacturer or an in-vehicle system contractor by using a cloud, for example, by using an over-the-air (over-the-air, OTA) update. During update, a new autonomous driving policy (also referred to as a new function) is usually added, and an autonomous driving policy library is updated accordingly. Currently, after the OTA update, a text update description is provided for a user to view detailed update content.

US2017267252A1 discloses a vehicle that provides an advanced driver assistance system (ADAS) recommendation function and a method of controlling the vehicle. The vehicle includes a collection unit that is configured to collect behavior information of a driver and a controller that is configured to determine an advanced driver assistance system (ADAS) mode recommendable to the driver based on the collected behavior information and to output the determined ADAS mode.

However, currently, the user is not accustomed to reading a long text update, and usually closes the update description by hand after the update is completed. Even if viewed by the user during the update, the update description is usually forgotten. When in need of an updated autonomous driving policy, the user usually cannot remember it. As a result, many autonomous driving policies of the in-vehicle assistance system are forgotten by the user, and even are not used after being updated. This will severely reduce use experience of the user.

### SUMMARY

The present invention provides a vehicle driving policy recommendation method according to claim 1, a vehicle driving policy recommendation apparatus according to claim 6, and a corresponding computer-readable storage medium according to claim 11. Embodiments are described in the dependent claims.

A possible driving scenario of a current vehicle is determined by collecting external-environment data and/or internal-environment data of the vehicle. In this way, matching is performed in a to-be-recommended policy library based on the driving scenario, to determine a to-be-recommended driving policy corresponding to the driving scenario, and recommend the to-be-recommended driving policy to a user. The to-be-recommended driving policy is actively recommended to the user, so that it can be ensured that after the driving policy is updated, the user can know a newly added driving policy and fully experience the newly added driving policy. A case in which the user is unaware of the newly added driving policy due to low perception of the user for text update content is avoided. The to-be-recommended driving policy executed at least once is removed from the to-be-recommended policy library, where after removal, an initial value of quantity of execution times of each to-be-recommended driving policy in the to-be-recommended policy library is zero.

According to a first aspect of the invention, a vehicle driving policy recommendation method is provided. The method may be applied to a terminal device, and the method may include: collecting at least one piece of environment information. The environment information may include external environment data and/or internal environment data. Then, at least one driving scenario is determined based on the collected at least one piece of environment information. Then, the at least one driving scenario is matched with a to-be-recommended policy library. The to-be-recommended policy library may include a correspondence between a driving scenario and a to-be-recommended driving policy. When at least one to-be-recommended driving policy is matched, the at least one to-be-recommended driving policy may be displayed. In this way, the terminal device can execute one or more displayed to-be-recommended driving policies according to a user instruction input by a user. In this invention, the corresponding driving scenario is determined by collecting the environment information, and then the corresponding to-be-recommended policy is matched in the to-be-recommended policy library with reference to the driving scenario, and then displayed to the user, so that it can be ensured that the user can know a newly added driving policy after the driving policy is updated. A case in which the user is unaware of the newly added driving policy due to low perception of the user for text update content is avoided. When the to-be-recommended policy is executed by using the user instruction, the user can fully experience the newly added driving policy.

In a possible implementation, before the collecting at least one piece of environment information, the method may further include: obtaining an update package. The update package may include a to-be-recommended driving policy and a driving scenario corresponding to the to-be-recommended driving policy. Then, the to-be-recommended driving policy and the driving scenario corresponding to the to-be-recommended driving policy in the update package are added to the to-be-recommended policy library. In this invention, the driving policy newly added during update is stored in the to-be-recommended policy library, so that the terminal device determines the driving scenario based on the environment information and determines the to-be-recommended driving policy. This ensures that the user can know or even fully experience the driving policy newly added after update, and avoids a case in which the user is unaware of the newly added driving policy due to low perception of the user for text update content.

In a possible implementation, the to-be-recommended driving policy may include priority information. The displaying the at least one to-be-recommended driving policy may include: displaying at least one to-be-recommended driving policy with a highest priority based on the priority information.

In a possible implementation, the driving scenario may include a single driving scenario and a composite driving scenario. A priority of a to-be-recommended driving policy that corresponds to the composite driving scenario is higher than a priority of a to-be-recommended driving policy that corresponds to the single driving scenario.

In a possible implementation, the executing one or more displayed to-be-recommended driving policies according to a user instruction may include: if an execution conflict exists between a plurality of to-be-recommended driving policies, executing some to-be-recommended driving policies of the plurality of to-be-recommended driving policies according to the user instruction. No execution conflict exists between the some executed to-be-recommended driving policies.

Also according to the first aspect of the invention, the method further includes: removing the to-be-recommended driving policy executed at least once from the to-be-recommended policy library, wherein after removal, an initial value of quantity of execution times of each to-be-recommended driving policy in the to-be-recommended policy library is zero. In this invention, the driving policy executed by the user is removed from the to-be-recommended policy library, so that it can be ensured that most of the recommended driving policies are driving policies that the user is unfamiliar with or even does not know, so that the user can fully experience the newly added driving policy.

According to a second aspect of the invention, a vehicle driving policy recommendation apparatus is provided, where the apparatus is a terminal device. The apparatus may include: a sensor, configured to collect at least one piece of environment information, where the environment information includes external environment data and/or internal environment data; and a processor, configured to: be coupled to a memory, and read and execute instructions stored in the memory. When run, the processor executes the instructions, so that the processor is configured to: determine at least one driving scenario based on the at least one piece of environment information; match the at least one driving scenario with a to-be-recommended policy library, where the to-be-recommended policy library includes a correspondence between a driving scenario and a to-be-recommended driving policy; and when at least one to-be-recommended driving policy is matched, control a display to display the at least one to-be-recommended driving policy, to execute the at least one to-be-recommended driving policy according to a user instruction.In this invention, the corresponding driving scenario is determined by collecting the environment information, and then the corresponding to-be-recommended policy is matched in the to-be-recommended policy library with reference to the driving scenario, and then displayed to the user, so that it can be ensured that the user can know a newly added driving policy after the driving policy is updated. A case in which the user is unaware of the newly added driving policy due to low perception of the user for text update content is avoided. When the to-be-recommended policy is executed by using the user instruction, the user can fully experience the newly added driving policy.

In a possible implementation, the apparatus further includes: a receiver, configured to obtain an update package. The update package includes a to-be-recommended driving policy and a driving scenario corresponding to the to-be-recommended driving policy. The processor is further configured to add the to-be-recommended driving policy and the driving scenario corresponding to the to-be-recommended driving policy to the to-be-recommended policy library. In this invention, the driving policy newly added during update is stored in the to-be-recommended policy library, so that the terminal device determines the driving scenario based on the environment information and determines the to-be-recommended driving policy. This ensures that the user can know or even fully experience the driving policy newly added after update, and avoids a case in which the user is unaware of the newly added driving policy due to low perception of the user for text update content.

In a possible implementation, the to-be-recommended driving policy includes priority information, and the processor is further configured to: control, based on the priority information, the display to display at least one to-be-recommended driving policy with a highest priority.

In a possible implementation, the driving scenario includes a single driving scenario and a composite driving scenario, and a priority of a to-be-recommended driving policy that corresponds to the composite driving scenario is higher than a priority of a to-be-recommended driving policy that corresponds to the single driving scenario.

In a possible implementation, the receiver is further configured to: receive a user instruction. The processor is further configured to: if an execution conflict exists between a plurality of to-be-recommended driving policies, execute some to-be-recommended driving policies of the plurality of to-be-recommended driving policies according to the user instruction, where no execution conflict exists between the some executed to-be-recommended driving policies.

Also according to the second aspect of the invention, the processor is further configured to: remove to-be-recommended driving policy executed at least once from the to-be-recommended policy library, wherein after removal, an initial value of quantity of execution times of each to-be-recommended driving policy in the to-be-recommended policy library is zero. In this invention, the driving policy executed by the user is removed from the to-be-recommended policy library, so that it can be ensured that most of the recommended driving policies are driving policies that the user is unfamiliar with or even does not know, so that the user can fully experience the newly added driving policy.

According to a third aspect of the invention, a computer-readable storage medium is provided. The computer-readable storage medium stores instructions. When the instructions are run on a terminal, the terminal is enabled to perform the method according to any one of the possible implementations of the first aspect.

According to a fourth example that is not encompassed by the claims but useful for understanding the invention, a computer device including instructions is provided. When the instructions are run on a terminal, the terminal is enabled to perform the method according to any one of the possible implementations of the first example.

According to a fifth example, that is not encompassed by the claims but useful for understanding the invention, a computer program product including instructions is provided. When the computer program product is run on a computer, the computer is enabled to perform the method according to any one of the possible implementations of the first example.

This invention discloses a vehicle driving policy recommendation method and apparatus. A possible driving scenario of a current vehicle is determined by collecting environment information of the vehicle, and then a corresponding to-be-recommended driving policy is determined based on the driving scenario, and is recommended to a user. This ensures that after the driving policy is updated, the user can know a newly added driving policy, and avoids a case in which the user is unaware of the newly added driving policy due to low perception of the user for text update content. In addition, the to-be-recommended driving policy is executed, so that the user can fully experience the newly added driving policy.

### BRIEF DESCRIPTION OF DRAWINGS

FIG. 1 is a schematic diagram of an application scenario according to an embodiment of this application;
FIG. 2 is a schematic diagram of an architecture of a vehicle driving policy recommendation system according to an embodiment of this application;
FIG. 3 is a flowchart of a vehicle driving policy recommendation method according to an embodiment of this application;
FIG. 4 is a schematic diagram of an interface for displaying a to-be-recommended driving policy according to an embodiment of this application;
FIG. 5A is a schematic diagram of another interface for displaying a to-be-recommended driving policy according to an embodiment of this application;
FIG. 5B is a schematic diagram of still another interface for displaying a to-be-recommended driving policy according to an embodiment of this application;
FIG. 5C is a schematic diagram of yet another interface for displaying a to-be-recommended driving policy according to an embodiment of this application;
FIG. 5D is a schematic diagram of still yet another interface for displaying a to-be-recommended driving policy according to an embodiment of this application;
FIG. 6 is a flowchart of another vehicle driving policy recommendation method according to an embodiment of this application;
FIG. 7 is a schematic diagram of updating a vehicle driving policy according to an embodiment of this application;
FIG. 8 is a schematic diagram of a structure of a terminal device according to an embodiment of this application;
FIG. 9 is a schematic diagram of an interface for displaying a to-be-recommended driving policy in Example 1 according to an embodiment of this application;
FIG. 10 is a schematic diagram of removing a to-be-recommended driving policy according to an embodiment of this application;
FIG. 11 is a schematic diagram of an interface for displaying a to-be-recommended driving policy in Example 2 according to an embodiment of this application; and
FIG. 12 is a schematic diagram of a vehicle driving policy recommendation apparatus according to an embodiment of this application.

### DESCRIPTION OF EMBODIMENTS

The following describes the technical solutions in embodiments of this application with reference to the accompanying drawings in embodiments of this application.

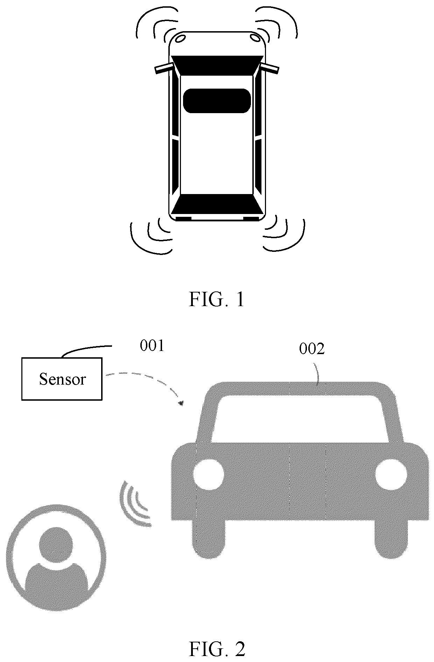

This application is mainly applied to a vehicle driving scenario. For example, as shown in FIG. 1, in a vehicle driving process, a user may face different cases. For example, when driving, the user may encounter a speed limit on some road sections, or may need to overtake a vehicle. For another example, the user may prepare to park a vehicle, or park on a roadside for a short rest. For different cases, the vehicle may correspondingly provide a corresponding driving policy. However, the user does not fully know the driving policy in the vehicle. For example, the vehicle is newly purchased by the user recently, and definitely, the user knows none of driving policies in the vehicle. Alternatively, after a new driving policy is updated on the vehicle, the user is also unaware of or does not know the driving policy newly added after update.

In some cases, for example, a new driving policy is updated on the vehicle, and a version update description is usually provided to describe content of this update. For example, the update content may be "Version XXXX.X. 1. Developer feedback optimization: Functions such as intelligent customer services, complaints, and problem feedback are added. Feedback entry: icon in the upper right corner; and floating button in the lower right corner of the page. 2. Homepage optimization and layout change: "Special recommendation", "demonstration project", and the like are newly added to facilitate service search. 3. Report optimization: Reports are downloaded and installed, and data view based on an application version dimension is supported. 4. Crash service: Crash analysis of XX system applications is supported. 5. Remote configuration service enhancement: XX system applications are supported. 6. A/B test service enhancement: XX system applications are supported. 7. New addition of XXX driving policies. It can be learned that, the update description is usually used to describe the newly added content of this update in the foregoing text manner. However, the user usually turns off the update description by hand, even if the user reads the text update description at that time. Because the user does not really use various newly added functions, after a period of time, the user still forgets the update content, or cannot remember the newly added functions at a proper time. For example, an autonomous parking driving policy is newly added in an update, and autonomous parking may be activated by using a specific button on a steering wheel. However, the user may not remember the newly added autonomous parking driving policy when really parking the vehicle, and usually performs parking in a previous manner. For the newly added autonomous parking driving policy of the vehicle, the user is still in a "not know-not use" state.

Therefore, this application provides a vehicle driving policy recommendation method. A terminal device determines, by collecting environment information of a vehicle, a possible driving scenario in which the current vehicle is located, and then determines a corresponding to-be-recommended driving policy based on the driving scenario. After recommending the to-be-recommended driving policy to a user, the terminal device executes one or more displayed to-be-recommended driving policies according to a user instruction. In the foregoing manner, it is ensured that after the driving policy is updated, the user can know the newly added driving policy, and a case in which the user is unaware of the newly added driving policy due to low perception of the user for text update content is avoided. In addition, the to-be-recommended driving policy is executed, so that the user can fully experience the newly added driving policy.

The following describes the technical solutions in embodiments of this application in detail with reference to the accompanying drawings in embodiments of this application.

FIG. 2 is a schematic diagram of an architecture of a vehicle driving policy recommendation system according to an embodiment of this application. The system may include a sensor 001 and a terminal device 002. The sensor 001 may be various sensors equipped on the terminal device or a vehicle, and is configured to collect environment information, so that the terminal device determines a driving scenario based on the collected environment information. In some examples, the sensor may include an image sensor, an ultrasonic sensor, a laser radar, a millimeter-wave radar, a pressure sensor, a gyro sensor, a barometric pressure sensor, a magnetic sensor, an acceleration sensor, a distance sensor, a temperature sensor, an ambient light sensor, and the like. It may be understood that the sensor 001 may include any possible sensor. This is not limited in this application.

The terminal device 002 may be, for example, an intelligent vehicle or an in-vehicle intelligent terminal. The terminal device 002 is equipped with an in-vehicle driving assistance system. The in-vehicle driving assistance system may include a vehicle driving policy library, and the vehicle driving policy library includes at least one driving policy. It may be understood that each driving policy may be applicable to different driving scenarios, to control the vehicle to complete a corresponding operation. The terminal device determines a possible driving scenario based on the environment information obtained by using the sensor 001. Then, a driving policy applicable to the current driving scenario is determined with reference to a driving policy in the vehicle driving policy library, and is recommended to the user. In an example, the driving policy may be recommended to the user in a form of a display and/or a microphone.

It may be understood that the sensor 001 in FIG. 2 may be deployed on the terminal device 002. Certainly, some sensors 001 may alternatively be deployed at specific locations, and are connected to the terminal device 002 in a wired or wireless manner. In some examples, for example, when the terminal device 002 is the intelligent vehicle, the sensor 001 may be deployed in the intelligent vehicle, and is configured to collect environment information inside and/or outside the vehicle. For another example, the terminal device may alternatively be an in-vehicle intelligent terminal connected to the vehicle in a wired or wireless manner, for example, including but not limited to any terminal device or portable terminal device like a mobile phone, a smart television, a smart sounder, a wearable device, a tablet computer, a desktop computer, a handheld computer, a notebook computer, an ultra-mobile personal computer (ultra-mobile personal computer, UMPC), a netbook, a personal digital assistant (personal digital assistant, PDA), a laptop (laptop), a mobile computer, an augmented reality (augmented reality, AR) device, a virtual reality (virtual reality, VR) device, an artificial intelligence (artificial intelligence, AI) device, and/or a vehicle-mounted device.

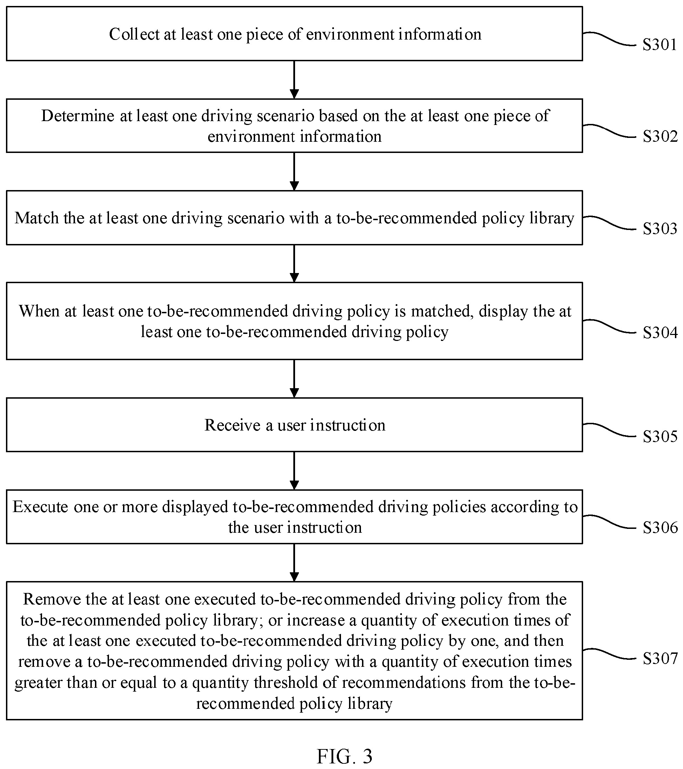

FIG. 3 is a flowchart of a vehicle driving policy recommendation method according to an embodiment of this application.

As shown in FIG. 3, this application provides a vehicle driving policy recommendation method. This method may be applied to the system shown in FIG. 2. In some examples, the method may be applied to the terminal device 002 in FIG. 2. The method may include the following steps.

S301: Collect at least one piece of environment information.

The terminal device 002 may collect at least one piece of environment information by using the sensor 001. In some examples, the sensor may be any sensor in FIG. 2, and may collect the environment information of the terminal device 002. The environment information may include external environment data and/or internal environment data.

In some examples, the external environment data may be data indicating an external environment of the terminal device 002, for example, a temperature inside a vehicle, an ambient temperature, a vehicle flow speed, a vehicle flow, a road identifier, an environment identifier, and a vehicle location. Some data, for example, the road identifier and the environment identifier, may be determined through corresponding processing by a processor after collection, and may be determined through image recognition after an image is collected by using a camera. For a specific implementation process, refer to an existing manner. Details are not described herein again.

In some other examples, the internal environment data may be status data, parameter change data, an operation log, and the like that indicate an in-vehicle system running on the terminal device 002. For example, the internal environment data may include an operation record generated when the user performs a hardware operation. For example, a log is generated after the user performs a reversing operation, and the log is used to record that the user performs the reversing operation at a particular moment.

It may be understood that the terminal device 002 may sense an external environment scenario situation of the terminal device 002 by using the external environment data, and/or may sense an internal status scenario situation of the terminal device 002 by using the internal environment data.

S302: Determine at least one driving scenario based on the at least one piece of environment information.

After collecting the at least one piece of environment information in S301, the terminal device 002 may determine the corresponding driving scenario based on the collected environment information. For example, the driving scenario that may correspond to the terminal device 002 is determined based on the external environment data and/or the internal environment data according to a preset rule. The driving scenario may include an external scenario, a terminal internal scenario, and/or a composite driving scenario.

In an example, the terminal device 002 may determine the external scenario of the terminal device 002 based on the external environment data. For example, if the external environment data is location information of the terminal device 002, it may be determined that a current driving scenario of the terminal device 002 may be a location scenario. Alternatively, if the external environment data is road identifier information, it may be determined, based on the road identifier information, that the current driving scenario of the terminal device 002 may be a road scenario. Alternatively, if the external environment data is temperature information of the terminal device 002, it may be determined, based on the temperature information, that the current driving scenario of the terminal device 002 may be a temperature scenario. Alternatively, if the external environment data is vehicle flow speed information, it may be determined, based on the vehicle flow speed information, that the current driving scenario of the terminal device 002 may be a traveling scenario or the like. It may be understood that the external environment data may alternatively be any other possible data, and the external scenario corresponding to the terminal device 002 is determined based on the external environment data. Certainly, in some examples, comprehensive analysis may be further performed with reference to a plurality of pieces of external environment data, to determine the external scenario of the terminal device 002. For example, it may be comprehensively determined with reference to the road identifier information and the location information that the driving scenario of the terminal device 002 may be the traveling scenario. For example, the road identifier information is a parking space identifier, and the location information is that the terminal device 002 is located in a parking lot. In this case, a scenario in which the terminal device 002 may be located near a parking space may be determined.

Certainly, some external environment data may be raw data collected by the sensor, for example, location information and temperature information. In addition, some external environment data may be obtained by analyzing the raw data collected by the sensor. For example, the sensor is a camera, collects image information, and performs image recognition on the image information. For example, a speed limit plate and a road identifier may be obtained through recognition. In this way, the terminal device 002 determines the corresponding external scenario based on the external environment data.

In some other examples, the terminal device 002 may further determine the terminal internal scenario of the terminal device 002 based on the internal environment data. For example, it is assumed that the internal environment data records that the user operates the vehicle to reverse. Therefore, the terminal device 002 may determine that the current driving scenario of the terminal device 002 may be a reversing scenario. For another example, it is assumed that the internal environment data records that the user steps on a throttle to accelerate the vehicle. In this case, the terminal device 002 may determine that the current driving scenario of the terminal device 002 may be an acceleration scenario. Definitely, comprehensive analysis may be further performed with reference to a plurality of pieces of internal environment data, to determine the terminal internal scenario of the terminal device 002. For example, with reference to internal environment data that records that the user steps on the throttle to accelerate the vehicle, internal environment data that records that the user turns on a turn light, and the like, the driving scenario that may be comprehensively determined by the terminal device 002 may be an acceleration overtaking scenario.

In some other examples, the terminal device 002 may further determine a composite driving scenario situation of the driving scenario of the terminal device 002 with reference to both the external environment data and the internal environment data. It may be understood that the single driving scenario is a driving scenario determined by using one piece of environment information, and the composite driving scenario may be a driving scenario determined by using a plurality of pieces of environment information. For example, analysis may be performed with reference to a plurality of pieces of external environment data and internal environment data. The external environment data includes data indicating that the road identifier information is a parking space identifier and data indicating that the location information is the parking lot, and the internal environment data includes the reversing operation performed by the vehicle. In this case, the terminal device 002 may determine that the driving scenario may be a driving scenario in which the vehicle enters the parking space in the parking lot.

In some examples, when the driving scenario is determined, recognition may be performed based on a prestored correspondence table between environment information and a driving scenario. For example, the prestored correspondence table may be shown in Table 1.

**Table 1**

| Environment information | Driving scenario |
|---|---|
| Temperature inside the vehicle, temperature outside the vehicle, difference between temperatures inside and outside the vehicle, and voice collection (such as "I am very hot" and "I am a little bit cold") | Driving in low-temperature/high-temperature environment |
| Location information | Vehicle location scenario |
| Vehicle flow speed | Fast driving/Low-speed traveling/Traffic jam |
| Yawning, rubbing eyes, covering the mouth, pulling down eyelids, squinting, suddenly nodding and then raising the head, massaging temples with hands, and the like | Fatigue driving |
| Alcohol in the air of the vehicle exceeding the standard, the cheeks and ears being flushed, the eyes being red, and the like | Drunk driving |
| Road identifier-parking space and parking lot | To be parked |
| Road identifier-speed limit plate | Speed limit traveling |
| Road identifier-shock absorbing belt | Low-speed traveling or quiet driving requirement |
| Road identifier-traffic lights and a vehicle speed being less than a defined value | Waiting for the traffic lights |
| Voice information (such as "irritated"), a passenger kicking the vehicle in the vehicle, and vehicle vibration | Irritated driving |
| Reversing operation | Reversing |
| Parking lot and reversing operation, or parking space and reversing operation | Parking into a parking space |
| Opening the door, or the passenger getting up and the vehicle being in a parking state | Someone getting off |
| Strange city, near a scenic spot, or open and beautiful scenery road sections | Driving near the scenic spot |
| Parking time exceeding a preset value | Free time |

It may be understood that Table 1 provides only some possible examples, and certainly may further include more correspondences between environment information and a driving scenario. Certainly, specific environment information content and a corresponding driving scenario may be adjusted or modified as required based on an actual situation. This is not limited in this application.

In some examples, a correspondence between a single driving scenario and a composite driving scenario may be preset. For example, when two single driving scenarios "to be parked" and "reversing" simultaneously appear, the two single driving scenarios may correspond to a composite driving scenario "parking into a parking space". In this case, the composite driving scenario "parking into a parking space" may be directly determined. Certainly, in some other examples, three driving scenarios: "to be parked", "reversing", and "parking into a parking space" may be simultaneously determined.

Definitely, in the foregoing process, the at least one driving scenario may be determined based on the at least one piece of environment information.

S303: Match the at least one driving scenario with a to-be-recommended policy library.

After determining the at least one driving scenario in S302, the terminal device 002 may perform matching with reference to the preset to-be-recommended policy library, to determine whether a to-be-recommended driving policy corresponding to the driving scenario exists. The to-be-recommended policy library may include a correspondence between a driving scenario and a to-be-recommended driving policy.

The to-be-recommended policy library is preconfigured, and a to-be-recommended driving policy included in the to-be-recommended policy library is a driving policy that has never been used by the user, or a driving policy with a quantity of execution times less than a quantity threshold of recommendations. It can be learned that all driving policies in the to-be-recommended policy library are driving policies that the user is unfamiliar with and does not know.

In an example, a mapping table indicating a correspondence between a driving scenario and a to-be-recommended driving policy may be set in the to-be-recommended policy library. In this way, the terminal device 002 can match the corresponding to-be-recommended driving policy in the mapping table based on the driving scenario determined in S302. For example, a correspondence between a driving scenario and a to-be-recommended driving policy may be shown in Table 2.

**Table 2**

| Driving scenario | To-be-recommended driving policy |
|---|---|
| Driving in low-temperature/high-temperature environment | Automatic temperature adjustment (for example, adjusting the temperature to a proper value, or reducing a difference between temperatures inside and outside the vehicle at a low temperature to avoid fogging, or reducing a speed of glass fogging) |
| Vehicle location scenario | Temporarily none |
| Fast driving/Low-speed traveling/Traffic jam | Autonomous cruising (autonomous driving by automatically controlling a vehicle traveling speed based on a vehicle flow speed) |
| Fatigue driving | Rest mode |
| Drunk driving | Designated driving call (designated driving service) |
| To be parked | Autonomous parking |
| Speed limit traveling | Speed limit mode (speed monitoring, acceleration notification, and the like) |
| Low-speed traveling or quiet driving requirement | Mute mode (a speaker is set to a silent state, or sound of the speaker is lowered, or the like) and speed limit mode |
| Waiting for the traffic lights | Temporarily none |
| Irritated driving | Soothing mode (playing soothing music, recommending emotion adjustment radio, and the like), or rest mode |
| Reversing | Temporarily none |
| Parking into a parking space | Autonomous parking |
| Someone getting off | Safe door opening (detecting vehicles coming from the rear when opening the door to avoid collision with the door, and the like) |
| Driving near the scenic spot | Starting a journey shoot |
| Free time | Entertainment mode (recommending movies, games, or the like) |

It can be learned that the to-be-recommended driving policy corresponding to the at least one driving scenario determined in S302 is matched by using the correspondence between a driving scenario and a to-be-recommended driving policy shown in Table 2. Certainly, to-be-recommended driving policies corresponding to some driving scenarios may be "temporarily none", to indicate that there is currently no suitable to-be-recommended driving policy for the driving scenario. In some examples, a plurality of different driving scenarios may correspond to a same to-be-recommended driving policy. However, a same driving scenario definitely does not correspond to a plurality of different to-be-recommended driving policies. It may be understood that Table 2 provides only some possible examples, and certainly may further include more correspondences between a driving scenario and a to-be-recommended driving policy. Specific driving scenario content and a corresponding to-be-recommended driving policy may be adjusted or modified as required based on an actual situation. This is not limited in this application.

In some other examples, each to-be-recommended driving policy in the to-be-recommended policy library may correspond to a two-classification neural network. The environment information collected in S301 is parameterized, and is input, as an input layer, into the two-classification neural network corresponding to each to-be-recommended driving policy. For each two-classification neural network, it is determined, based on a result of an output layer, whether an activation condition of a to-be-recommended driving policy corresponding to the neural network is met. For example, the collected environment information is parameterized and then input into a two-classification neural network corresponding to a to-be-recommended driving policy A, and an output result of the two-classification neural network is 65% "satisfied" and 35% "not satisfied". If 60% "satisfied" is set to a to-be-recommended policy activation condition, it may be determined that an activation condition of the to-be-recommended driving policy A is met. Alternatively, the output result is "satisfied". If the output "satisfied" is set to the to-be-recommended policy activation condition, it may be directly determined that the activation condition of the to-be-recommended driving policy A is met.

S304: When the at least one to-be-recommended driving policy is matched, display the at least one to-be-recommended driving policy.

When the at least one to-be-recommended driving policy is determined, the at least one determined to-be-recommended driving policy may be notified to the user by using the terminal device 002. For example, a display in the terminal device 002 may be used for display, or a speaker in the terminal device 002 may be used for voice broadcast.

In some examples, if the display in the terminal device 002 is used for display, the to-be-recommended driving policy and an option of whether to execute the to-be-recommended driving policy may be displayed, so that the user performs determining. Definitely, when the at least one to-be-recommended driving policy is determined, it means that there is a driving policy that the user is unfamiliar with and does not know. For example, the driving policy is a driving policy that has never been used by the user, or a driving policy with a quantity of execution times less than a quantity threshold of recommendations. Therefore, the determined to-be-recommended driving policy may be recommended to the user, so that the user selects whether to execute the to-be-recommended driving policy.

In some examples, the to-be-recommended driving policy may include priority information. When at least one to-be-recommended driving policy is matched, display or voice broadcast may be performed based on priority information of the matched to-be-recommended driving policy. For example, if a display manner is used, a to-be-recommended driving policy with a highest priority may be displayed based on priority information; or the to-be-recommended driving policies are sorted in descending order of priority information, and are displayed in a form of a list, or are sequentially displayed. For another example, if the user is notified in a voice broadcast manner, the to-be-recommended driving policy with the highest priority may be broadcast by voice based on priority information, or voice is broadcast in descending order of the priority information. It may be understood that, if there are a plurality of to-be-recommended driving policies with a highest priority, the plurality of to-be-recommended driving policies with the highest priority may be simultaneously displayed or broadcast by voice.

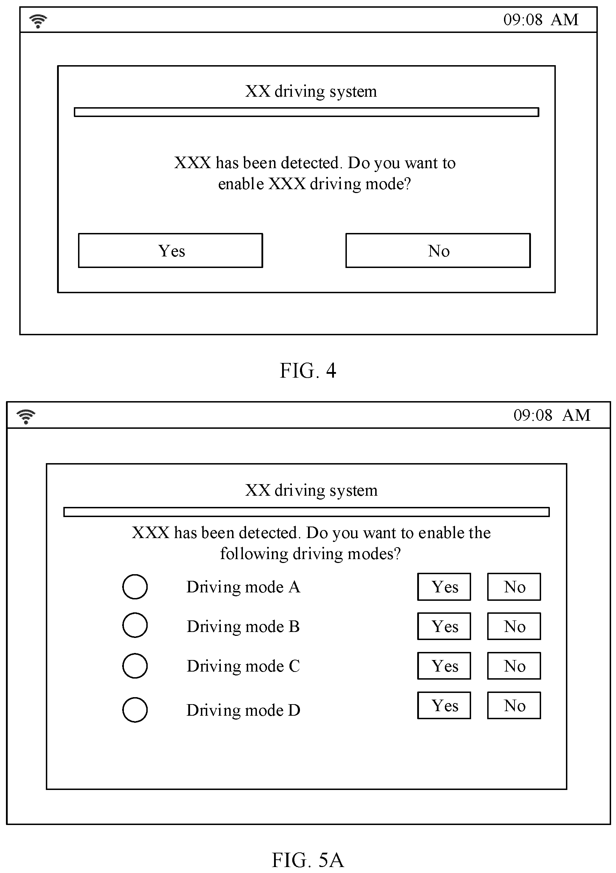

For example, FIG. 4 is a schematic diagram of an interface for displaying a to-be-recommended driving policy. It can be learned that the interface is displayed by using an example in which one to-be-recommended driving policy is recommended. The interface includes content of a to-be-recommended driving policy recommended to the user, and an option provided for the user for selection. This example is applicable to a case in which only one to-be-recommended driving policy is matched, or only a to-be-recommended driving policy with a highest priority is recommended based on priority information. Certainly, FIG. 5A shows a schematic diagram of another interface for displaying a to-be-recommended driving policy. For example, when a to-be-recommended driving policy is recommended, to-be-recommended driving policies may be displayed on the display in a preset sequence. The preset sequence is, for example, descending order of priority information of the to-be-recommended driving policies. It can be further learned from FIG. 5A that each displayed to-be-recommended driving policy may have an option corresponding to the to-be-recommended driving policy, and the option is used by the user for selection. It may be understood that if not all the to-be-recommended driving policies can be displayed on one page, the to-be-recommended driving policies may be displayed on a plurality of pages. In this way, the user switches a screen by swiping the screen or by using a physical button, voice, or the like, and selects a displayed to-be-recommended driving policy.

In some examples, if a to-be-recommended driving policy includes priority information, a priority of a to-be-recommended driving policy that corresponds to a composite driving scenario may be set to be higher than a priority of a to-be-recommended driving policy that corresponds to a single driving scenario. The reason is that it may be considered that the composite driving scenario may be closer to a real driving scenario than the single driving scenario. In addition, when the to-be-recommended driving policy is matched, the to-be-recommended driving policy corresponding to the composite driving scenario may be first matched, and then the to-be-recommended driving policy corresponding to the single driving scenario is matched. In an example, matching may alternatively be stopped when the to-be-recommended driving policy corresponding to the composite driving scenario is matched.

In some examples, different driving scenarios may correspond to same to-be-recommended driving policies. Therefore, during display or voice broadcast, the same to-be-recommended driving policies may be combined, and displayed only once, or broadcast by voice only once.

S305: Receive a user instruction.

The terminal device 002 may receive the user instruction input by the user. The user instruction indicates whether to execute the to-be-recommended driving policy displayed to the user, or indicates whether to execute the to-be-recommended driving policy broadcast to the user by voice.

In an example, the user instruction may be determined by receiving an operation performed by the user on a display or by collecting specific voice information. For example, the user touches a corresponding option on the display, or touches a physical button connected to the terminal device 002, or detects, through speech recognition, some keyword information said by the user. The keyword information is, for example, keywords such as "execute", "confirm execution", "OK", and "not use", which may indicate an intention of the user. Certainly, if a plurality of to-be-recommended driving policies are displayed or broadcast by voice in S304, the keyword information may alternatively be, for example, "start an XX driving mode" or "XX driving mode" that is used to directly indicate a specific driving policy. Certainly, specific keyword information may be set as required based on an actual situation. This is not limited in this application.

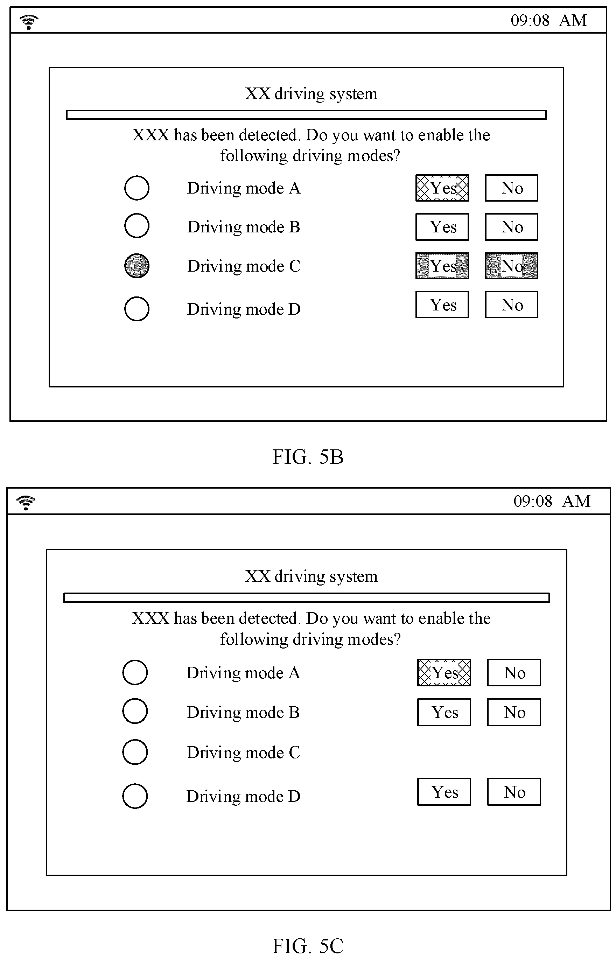

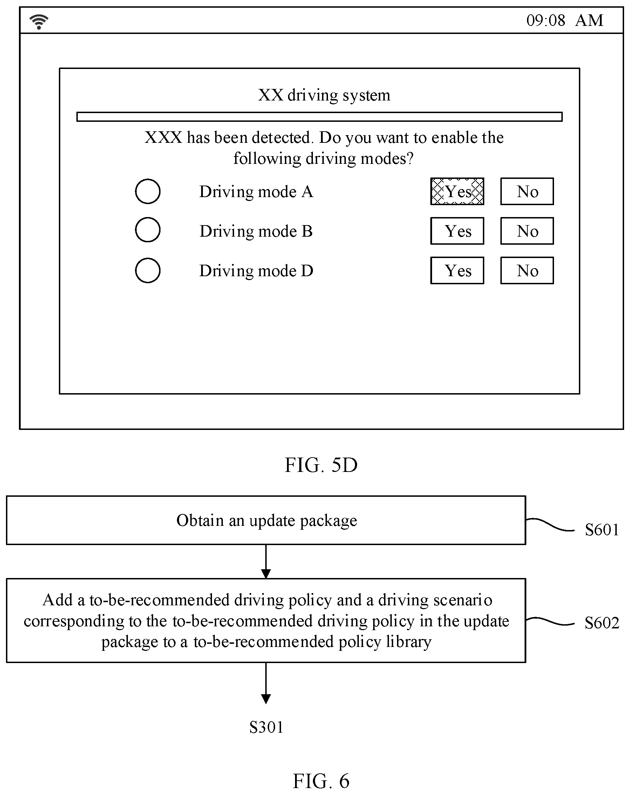

In some examples, if an execution conflict exists between some of the plurality of to-be-recommended driving policies recommended to the user in S304, the user instruction that is received in S305 and that indicates execution of the to-be-recommended driving policy needs to indicate to-be-recommended driving policies between which there is no execution conflict. For example, FIG. 5A is still used as an example. When an execution conflict exists between a driving mode A and a driving mode C, after the user selects to execute the driving mode A, a corresponding option of the driving mode C cannot be selected by the user. As shown in FIG. 5B, the option corresponding to the driving mode C is set to gray. It may be understood that a gray option represents an option that cannot be selected by the user. Alternatively, as shown in FIG. 5C, the corresponding option of the driving mode C is not displayed, or as shown in FIG. 5D, the driving mode C may be not displayed. Certainly, in some other examples, when the user selects to execute the driving mode A, the user may alternatively be prompted in a text pop-up window and/or voice broadcast manner. For example, it is prompted that "an execution conflict exists between the driving mode A and the driving mode C, and the driving mode C cannot be selected after the driving mode A is selected", or another equivalent expression manner is used. In this way, the user knows that the execution conflict exists between the driving mode A and the driving mode C. It may be understood that this may alternatively be implemented in any other equivalent manner. This is not limited in this application.

Definitely, if driving modes are normally displayed and may be selected by the user, it means that the driving modes may be compatible with each other, and no execution conflict exists. In some cases, if a to-be-recommended driving policy covers another to-be-recommended driving policy, it may be considered that an execution conflict exists between such to-be-recommended driving policies.

S306: Execute one or more displayed to-be-recommended driving policies according to the user instruction.

The terminal device 002 determines, based on the user instruction received in S305, to execute the one or more to-be-recommended driving policies that are selected by the user and that are displayed or recommended by voice. Certainly, in some examples, it may alternatively be determined, based on the user instruction received in S305, not to execute the one or more to-be-recommended driving policies that are selected by the user and that are displayed or recommended by voice.

It may be understood that when the user inputs the user instruction to indicate the one or more to-be-recommended driving policies that are displayed or broadcast by voice, the corresponding to-be-recommended driving policies are executed based on the corresponding user instruction. Definitely, there is no execution conflict between the one or more executed to-be-recommended driving policies.

To ensure that the to-be-recommended policy library can be updated in real time, therefore, the following steps may be further included after S306.

S307: Remove the at least one executed to-be-recommended driving policy from the to-be-recommended policy library. Alternatively, a quantity of execution times of the at least one executed to-be-recommended driving policy is increased by one, and a to-be-recommended driving policy with a quantity of execution times greater than or equal to a quantity threshold of recommendations is removed from the to-be-recommended policy library.

After determining to execute the at least one to-be-recommended driving policy, the terminal device 002 may remove the corresponding to-be-recommended driving policy from the to-be-recommended policy library.

The at least one executed to-be-recommended driving policy is immediately removed from the to-be-recommended policy library after the execution is completed. aAfter the to-be-recommended driving policy is removed, all to-be-recommended driving policies in the to-be-recommended policy library are driving policies that have never been used (or executed) by the user.

In some other examples, a quantity of execution times may be further set for each to-be-recommended driving policy. According to the invention, an initial value may be set to zero, indicating that the to-be-recommended driving policy is executed for zero times. Each time after the to-be-recommended driving policy is executed, the quantity of execution times of the to-be-recommended driving policy that is correspondingly executed may be increased by one. Then, the quantity of execution times of each to-be-recommended driving policy may be compared with the quantity threshold of recommendations. It may be understood that the quantity threshold of recommendations may be preset, for example, three or five. Certainly, a separate quantity threshold of recommendations may be further set for each to-be-recommended driving policy. A specific value of the quantity threshold of recommendations may be set as required based on an actual situation. This is not limited in this application. Then, a to-be-recommended driving policy with a quantity of execution times greater than or equal to the quantity threshold of recommendations is removed from the to-be-recommended policy library. In this application, by setting the quantity threshold of recommendations, it can be ensured that the to-be-recommended driving policy is recommended to the user for more times, so that the user can be familiar with the corresponding driving policy by using the to-be-recommended driving policy for a plurality of times. This avoids a case in which some driving policies are recommended only once, and the user is still unfamiliar with the corresponding driving policies because the user does not frequently use the driving policies.

Currently, some in-vehicle driving assistance systems do not recommend some driving policies to the user. Because the user has not used some driving policies, user data feedbacks that may be collected by a manufacturer or an in-vehicle system contractor are excessively few, and the excessively few data feedbacks reduce development of the in-vehicle driving assistance system. Therefore, in this application, after S306, user data generated when the user executes the at least one to-be-recommended driving policy may be further recorded, and after the to-be-recommended driving policy is executed, all or some of the generated user data is sent to a cloud server, so that the manufacturer or the in-vehicle system contractor may perform driving policy optimization, technology upgrade, or the like.

FIG. 6 is a flowchart of another vehicle driving policy recommendation method according to an embodiment of this application.

For example, as shown in FIG. 6, before S301, the to-be-recommended policy library may be further updated by receiving an update package. Therefore, the method shown in FIG. 3 may further include the following steps.

S601: Obtain the update package.

The terminal device 002 may receive the update package delivered by a cloud platform or a server. The update package may include: a to-be-recommended driving policy and a driving scenario corresponding to the to-be-recommended driving policy.

In an example, the terminal device 002 may perform update in an over-the-air (over-the-air, OTA) manner.

In some examples, the update package may further include a function guidance or description corresponding to the to-be-recommended driving policy, to provide guidance or describe the to-be-recommended driving policy. For example, the function guidance or description may be a text description, a driving policy guidance process, or the like.

S602: Add the to-be-recommended driving policy and the driving scenario corresponding to the to-be-recommended driving policy in the update package to the to-be-recommended policy library.

The terminal device 002 parses the update package obtained in S601 to obtain the to-be-recommended driving policy and the driving scenario corresponding to the to-be-recommended driving policy, and adds the to-be-recommended driving policy and the driving scenario corresponding to the to-be-recommended driving policy to the to-be-recommended policy library.

In an example, Table 2 is used as an example. The to-be-recommended driving policy and the driving scenario corresponding to the to-be-recommended driving policy in the update package are added to the mapping table shown in Table 2. Certainly, in another example, the mapping table may alternatively be a mapping table combining Table 1 and Table 2, for example, as shown in Table 3.

**Table 3**

| Environment information | Driving scenario | To-be-recommended driving policy |
|---|---|---|
| Temperature inside the vehicle, temperature outside the vehicle, difference between temperatures inside and outside the vehicle, and voice collection (such as "I am very hot" and "I am a little bit cold") | Driving in low-temperature/high-temperature environment | Automatic temperature adjustment (for example, adjusting the temperature to a proper value, or reducing a difference between temperatures inside and outside the vehicle at a low temperature to avoid fogging, or reducing a speed of glass fogging) |
| Location information | Vehicle location scenario | Temporarily none |
| Vehicle flow speed | Fast driving/Low-speed traveling/Traffic jam | Autonomous cruising (autonomous driving by automatically controlling a vehicle traveling speed based on a vehicle flow speed) |
| Yawning, rubbing eyes, covering the mouth, pulling down eyelids, squinting, suddenly nodding and then raising the head, massaging temples with hands, and the like | Fatigue driving | Rest mode |
| Alcohol in the air of the vehicle exceeding the standard, the cheeks and ears being flushed, the eyes being red, and the like | Drunk driving | Designated driving call (designated driving service) |
| Road identifier-parking space and parking lot | To be parked | Autonomous parking |
| Road identifier-speed limit plate | Speed limit traveling | Speed limit mode (speed monitoring, acceleration notification, and the like) |
| Road identifier-shock absorbing belt | Low-speed traveling or quiet driving requirement | Mute mode (a speaker is set to a silent state, or sound of the speaker is lowered, or the like) and speed limit mode |
| Road identifier-traffic lights and a vehicle speed being less than a defined value | Waiting for the traffic lights | Temporarily none |
| Voice information (such as "irritated"), a passenger kicking the vehicle in the vehicle, and vehicle vibration | Irritated driving | Soothing mode (playing soothing music, recommending emotion adjustment radio, and the like), or rest mode |
| Reversing operation | Reversing | Temporarily none |
| Parking lot and reversing operation, | Parking into a parking space | Autonomous parking |
| or parking space and reversing operation | | |
| Opening the door, or the passenger getting up and the vehicle being in a parking state | Someone getting off | Safe door opening (detecting vehicles coming from the rear when opening the door to avoid collision with the door, and the like) |
| Strange city, near a scenic spot, or open and beautiful scenery road sections | Driving near the scenic spot | Starting a journey shoot |
| Parking time exceeding a preset value | Free time | Entertainment mode (recommending movies, games, or the like) |

Correspondingly, the update package may further include environment information used to determine a driving scenario. When the environment information in the update package is different from the environment information of the corresponding driving scenario in Table 3, the environment information in Table 3 may be updated to be the environment information of the corresponding driving scenario in the update package. Certainly, for a driving scenario that is not in Table 3, during update, the to-be-recommended driving policy, the driving scenario corresponding to the to-be-recommended driving policy, and the environment information of the driving scenario that are in the update package may be directly added to Table 3 together.

In some examples, if an updated to-be-recommended driving policy is still in the to-be-recommended policy library, and a quantity of execution times is set, the quantity of execution times may be set to zero. If the updated to-be-recommended driving policy is not in the to-be-recommended policy library, but a same driving policy exists in a normal policy library, if a quantity threshold of recommendations is set, a corresponding quantity threshold of recommendations may be separately set for the to-be-recommended driving policy, a value of the quantity threshold of recommendations is set to be less than a previous quantity threshold of recommendations corresponding to the to-be-recommended driving policy, and the same driving policy in the normal policy library is removed. For example, it is assumed that a to-be-recommended driving policy has been removed from the to-be-recommended policy library, and a quantity threshold of recommendations that is set when the to-be-recommended driving policy is in the to-be-recommended policy library last time is five. After the terminal device receives the update package, if the update package includes the to-be-recommended driving policy, after the to-be-recommended driving policy is added to the to-be-recommended policy library again, a corresponding quantity threshold of recommendations of the to-be-recommended driving policy may be set to any value less than five, for example, three or two. Because the to-be-recommended driving policy has been previously well known by the user, it may be considered that the user may know and be familiar with the updated to-be-recommended driving policy by using a smaller quantity of execution times.

Certainly, in some other examples, the updated to-be-recommended driving policy may alternatively be directly added to the to-be-recommended policy library, and then the to-be-recommended policy library and the normal policy library are checked. In addition, a driving policy that is located in the normal policy library and that appears in both the normal policy library and the to-be-recommended policy library is deleted. The normal policy library is used to store a driving policy well known to the user. A standard well known to the user may be that the driving policy has been recommended to the user at least once.

After S602 is performed, S301 may continue to be performed.

It may be understood that, an objective of S601 and S602 is to synchronously update the to-be-recommended policy library after the update package of the cloud platform or the server is received, to better recommend a driving policy that the user is unfamiliar with or is unclear about.

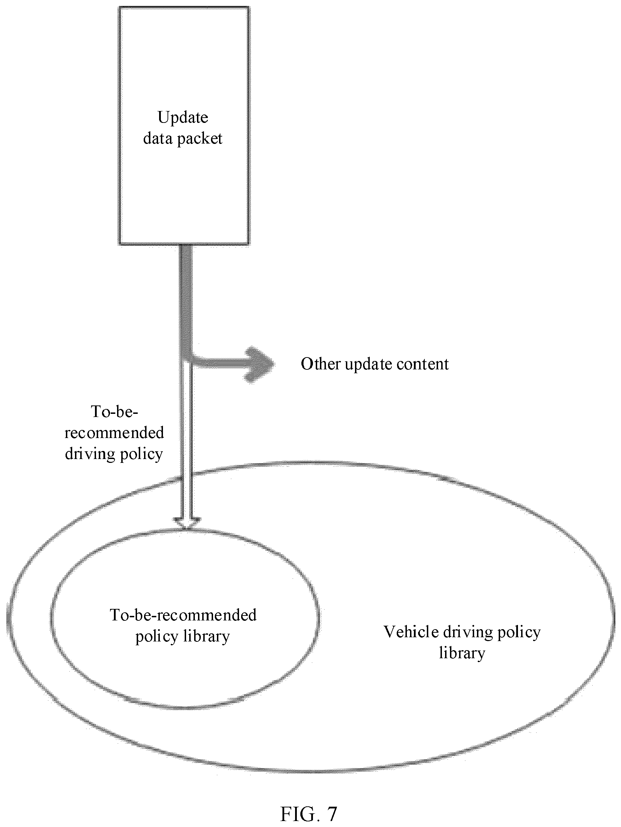

FIG. 7 is a schematic diagram of updating a vehicle driving policy according to an embodiment of this application.

For example, as shown in FIG. 7, an update process in FIG. 6 is provided. It can be learned that, after receiving the update package delivered by the cloud platform or the server, the terminal device 002 may parse the update package, and then update other update content based on an existing manner. A to-be-recommended driving policy is directly added to the to-be-recommended policy library. It can be further learned from FIG. 7 that, for the terminal device 002, there is a larger policy library, that is, a vehicle driving policy library, including all driving policies. Definitely, the to-be-recommended policy library is only a subset of the vehicle driving policy library. Certainly, the vehicle driving policy library may further include a subset: the normal policy library.

In an example, when the terminal device 002 is just delivered from a factory or in an initial state, all driving policies may be considered as to-be-recommended driving policies by default, and all the driving policies are added to the to-be-recommended policy library.

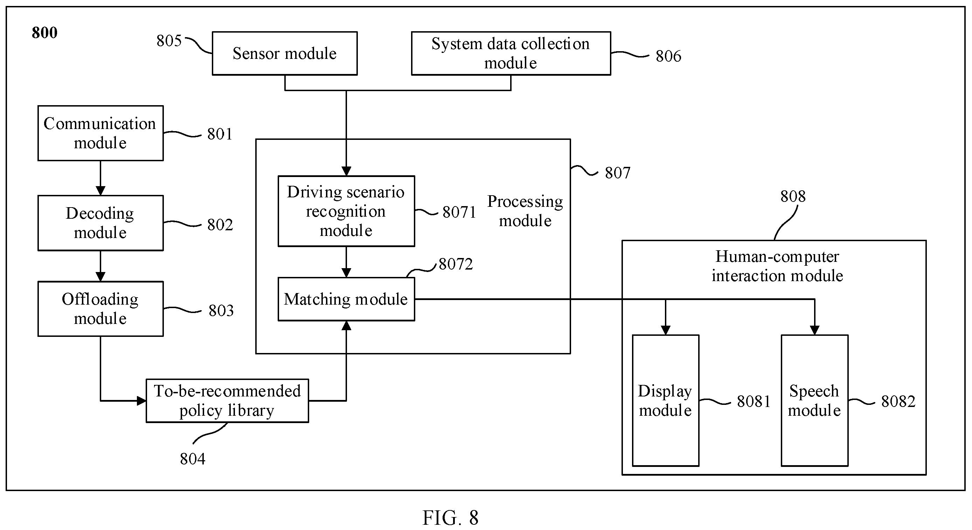

FIG. 8 is a schematic diagram of a structure of a terminal device according to an embodiment of this application.

As shown in FIG. 8, this application provides a schematic diagram of a structure of a terminal device. A terminal device 800 may be the terminal device 002 in FIG. 2 to FIG. 7. The terminal device 800 includes: a communication module 801, a decoding module 802, an offloading module 803, a to-be-recommended policy library 804, a sensor module 805, a system data collection module 806, a processing module 807, and a human-computer interaction module 808. The processing module 807 may further include a driving scenario recognition module 8071 and a matching module 8072. The human-computer interaction module 808 may further include a display module 8081 and a speech module 8082.

The communication module 801 may be a communication port of the terminal device 800, and may perform wired or wireless communication. For example, the communication module 801 may be connected to a cloud platform or a server by using wireless communication, to perform OTA update and download an update package.

The decoding module 802 is configured to decode the update package downloaded by the communication module 801.

The offloading module 803 is configured to: recognize, from a decoded stream obtained through decoding by the decoding module 802, a to-be-recommended driving policy and a driving scenario corresponding to the to-be-recommended driving policy, and add the to-be-recommended driving policy and the driving scenario corresponding to the to-be-recommended driving policy to the to-be-recommended policy library 804.

The communication module 801, the decoding module 802, the offloading module 803, and the to-be-recommended policy library 804 jointly complete the processes described in FIG. 6 and FIG. 7. For a specific implementation, refer to corresponding descriptions in FIG. 6 and FIG. 7. Details are not described herein again.

The sensor module 805 may include various sensors that are carried in the terminal device 800 and that can be connected to the terminal device 800 in a wired or wireless manner, and is mainly configured to collect external environment data, to determine a driving scenario.

The system data collection module 806 is mainly configured to collect internal environment data, for example, an operation status like turning a steering wheel, braking, or putting into gear, to determine a driving scenario.

The driving scenario recognition module 8071 in the processing module 807 is mainly configured to recognize a driving scenario by using environment information obtained by the sensor module 805 and/or the system data collection module 806, to determine at least one driving scenario.

The matching module 8072 is configured to match a corresponding to-be-recommended driving policy from the to-be-recommended policy library 804 based on the driving scenario determined by the driving scenario recognition module 807.

When at least one to-be-recommended driving policy is matched, the at least one to-be-recommended driving policy is displayed by using the display module 8081 in the human-computer interaction module 808, or broadcast by voice by using the speech module 8082 in the human-computer interaction module 808, so that the user performs selection. The display module 8081 may be, for example, a display, and the speech module 8082 may be, for example, a speaker or a microphone.

The to-be-recommended policy library 804, the sensor module 805, the system data collection module 806, the processing module 807, and the human-computer interaction module 808 jointly complete the processes described in FIG. 2 to FIG. 5D. For a specific implementation, refer to corresponding descriptions in FIG. 2 to FIG. 5D. Details are not described herein again.

Next, this application provides two more specific examples to describe the solutions described in FIG. 2 to FIG. 8.

Example 1: An autonomous parking function is used as a to-be-recommended driving policy.

In some examples, the terminal device may carry the autonomous parking function in an initial state or before delivery from a factory. Because all driving policies are considered as to-be-recommended driving policies by default in an initial state or before delivery from a factory, the autonomous parking function may be added to the to-be-recommended policy library as a to-be-recommended driving policy. Certainly, in some other examples, the terminal device may further perform update by receiving the update package sent by the cloud platform or the server, and parse out that the update package carries the autonomous parking function. In this case, the autonomous parking function and a corresponding driving scenario (which may also be referred to as an activation condition) may be added to the to-be-recommended policy library. For example, after the user uses the terminal device for a period of time, the terminal device may receive a push update sent by the cloud platform or the server. The push update may be the update package. In some examples, the update package may further carry a function guidance/description of the autonomous parking function, to provide a guidance/description when the autonomous parking function is enabled.

Then, in a working state, the terminal device may collect various possible environment information by using a sensor, for example, a temperature inside the vehicle, an ambient temperature, a vehicle flow speed, a vehicle flow, a road identifier, an environment identifier, a vehicle location, and internal data of an in-vehicle system. Then, a driving scenario in which the current terminal device may be located is determined based on the collected environment information. For example, information indicating that a location of the terminal device is the parking lot may be collected by using a location sensor, and by using an image sensor, a road identifier/environment identifier may be collected and parking space information may be recognized. Alternatively, it may be recognized, based on a vehicle operation performed by the user within a specific time range, that the user is performing a reversing operation. It may be understood that the information indicating that the location is the parking lot and the parking space information may belong to the external environment data, and the reversing operation may belong to the internal environment data.

The terminal device may determine, according to a preset rule with reference to both the collected external environment data and the collected internal environment data, the at least one driving scenario in which the terminal device may be located. The preset rule is, for example, the mapping table between environment information and a driving scenario shown in Table 1 or Table 3. For example, when it is recognized that the terminal device is located in the parking lot and is located near the parking space, a to-be-parked scenario may be determined. In this case, a corresponding scenario of parking into a parking space may be recognized with reference to the reversing operation.

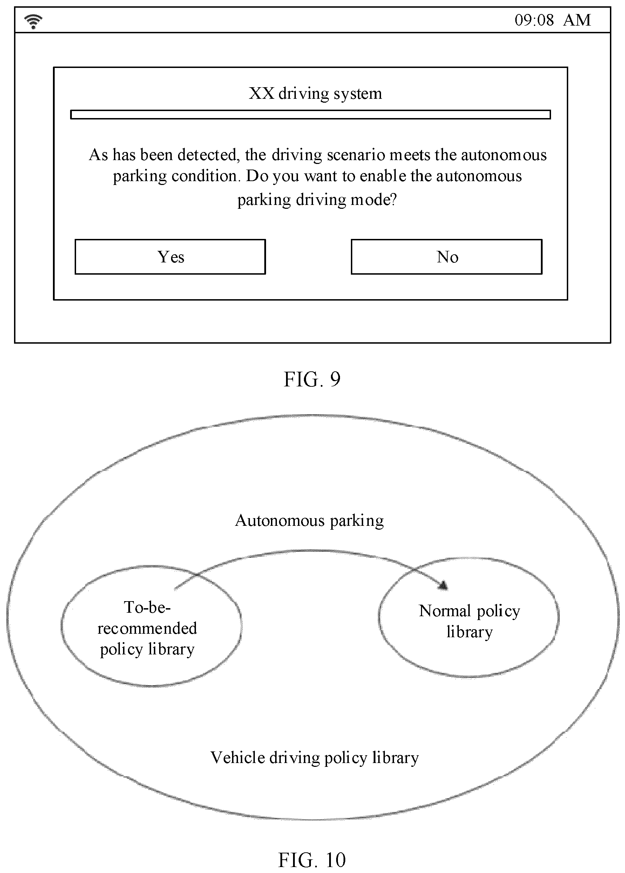

The terminal device performs matching in the to-be-recommended policy library based on the determined scenario of parking into a parking space, for example, the mapping table between a driving scenario and a to-be-recommended driving policy shown in Table 2 or Table 3. It is determined whether there is a to-be-recommended driving policy corresponding to the determined driving scenario. For example, based on Table 2 or Table 3, it is determined that there are corresponding to-be-recommended driving policies for both the to-be-parked scenario and the scenario of parking into a parking space, and both driving policies are "autonomous parking". In this case, the matched "autonomous parking" may be recommended to the user, for example, displayed by using a display of the terminal device, or broadcast by voice by using a speaker. If a manner of displaying by using the display is used, for example, the display manner may be shown in FIG. 9. For example, "As has been detected, the driving scenario meets the autonomous parking condition. Do you want to enable the autonomous parking driving mode?" is displayed, and a corresponding option is provided for the user to perform selection.

The terminal device recognizes the user instruction by collecting the user instruction input by the user, for example, by touching the option on the display, pressing the physical button, or by speech recognizing a keyword. It is determined whether to execute the to-be-recommended driving policy "autonomous parking". For example, when the user taps "Yes" or detects a voice keyword "Yes", "Execute", or "Enable autonomous parking", it indicates that the user is willing to execute the to-be-recommended driving policy "autonomous parking", and the terminal device executes the to-be-recommended driving policy "autonomous parking". For example, the terminal device may take over an operation performed by the user on the vehicle, and perform autonomous parking. A specific operation during policy execution may be adjusted as required based on an actual situation. This is not limited in this application.

After execution of the to-be-recommended driving policy "autonomous parking" is completed, the in-vehicle driving assistance system on the terminal device exits, and the user is prompted. In addition, the to-be-recommended driving policy "autonomous parking" may be removed from the to-be-recommended policy library, for example, moved to the normal policy library. Certainly, in some other examples, a quantity of execution times of the to-be-recommended driving policy "autonomous parking" may alternatively be increased by one, and whether a quantity of execution times of the to-be-recommended driving policy is greater than or equal to a quantity threshold of recommendations corresponding to the to-be-recommended driving policy is checked. If the quantity of execution times of the to-be-recommended driving policy is greater than or equal to the quantity threshold of recommendations corresponding to the to-be-recommended driving policy, the to-be-recommended driving policy "autonomous parking" is removed from the to-be-recommended policy library, and is moved to the normal policy library. For example, as shown in FIG. 10, when a specific condition is met, "autonomous parking" may be moved from the to-be-recommended policy library to the normal policy library.

Example 2: A rest mode is used as a to-be-recommended driving policy.

In some examples, the terminal device may carry the rest mode in an initial state or before delivery from a factory. The rest mode is added to the to-be-recommended policy library as the to-be-recommended driving policy by default. Certainly, the terminal device may alternatively receive the update package sent by the cloud platform or the server, parse out that the update package carries the rest mode, and add the rest mode to the to-be-recommended policy library.

Then, in the working state, the terminal device collects various possible environment information by using the sensor, for example, collects the external environment data and the internal environment data. For example, after an image is collected by using an image sensor, a facial posture, a hand posture, and a posture of another part of the user, for example, a mouth shape, a movement status of facial muscles, an eyebrow spacing, an eye size, and eye movement, and an action of stretching or covering a mouth are recognized by using an image recognition technology.

The terminal device may determine, according to a preset rule with reference to both the collected external environment data and the collected internal environment data, the at least one driving scenario in which the terminal device may be located. The preset rule is, for example, the mapping table between environment information and a driving scenario shown in Table 1 or Table 3. For example, when it is recognized that the mouth shape is opening and/or accompanied by the action of covering the mouth, it may be determined that the user may be currently in a fatigue state, and the driving scenario is determined as a fatigue driving scenario.

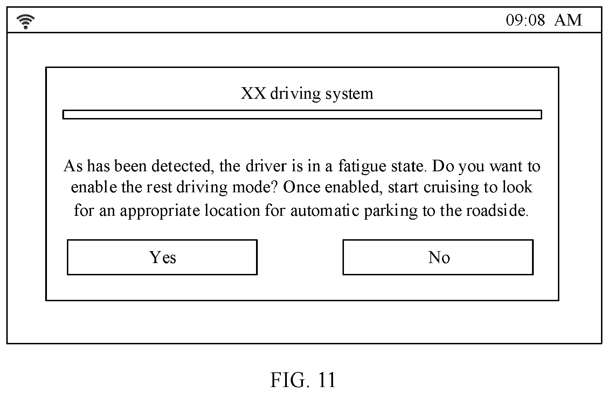

The terminal device performs matching in the to-be-recommended policy library based on the determined fatigue driving scenario, for example, the mapping table between a driving scenario and a to-be-recommended driving policy shown in Table 2 or Table 3. It is determined whether there is a to-be-recommended driving policy corresponding to the determined driving scenario. For example, it is determined, based on Table 2 or Table 3, that there is a corresponding to-be-recommended driving policy for the fatigue driving scenario, and the to-be-recommended driving policy is the "rest mode". In this case, the matched "rest mode" may be recommended to the user, for example, displayed by using the display of the terminal device, or broadcast by voice by using the speaker. If a manner of displaying by using the display is used, for example, the display manner may be shown in FIG. 11. For example, "As has been detected, the driver is in a fatigue state. Do you want to enable the rest driving mode? Once enabled, start cruising to look for an appropriate location for automatic parking to the roadside." is displayed, and a corresponding option is provided for the user to perform selection.

The terminal device recognizes the user instruction by collecting the user instruction input by the user, for example, by touching the option on the display, pressing the physical button, or by speech recognizing a keyword. It is determined whether to execute the to-be-recommended driving policy "rest mode". For example, when the user taps "Yes" or detects a voice keyword "Yes", "Execute", or "Enable rest mode", it indicates that the user is willing to execute the to-be-recommended driving policy "rest mode", and the terminal device executes the to-be-recommended driving policy "autonomous parking". For example, the terminal device may start cruising by using the in-vehicle driving assistance system, and park at a proper location on the roadside. Then, a series of parameter configurations are performed to generate a corresponding vehicle action. For example, after execution of the rest mode is completed, the vehicle stops to the roadside, and a vehicle window is raised, an air conditioner is turned on to a proper temperature, soothing music is played, a light is adjusted to a warm color, and a seat is tilted to a preset angle. A specific operation during policy execution may be adjusted as required based on an actual situation. This is not limited in this application.

After execution of the to-be-recommended driving policy "rest mode" is completed, the in-vehicle driving assistance system on the terminal device exits, and the user is prompted. In addition, the to-be-recommended driving policy "rest mode" may be removed from the to-be-recommended policy library, for example, moved to the normal policy library. Certainly, a quantity of execution times of the to-be-recommended driving policy "rest mode" may alternatively be increased by one, and whether a quantity of execution times of the to-be-recommended driving policy is greater than or equal to a quantity threshold of recommendations corresponding to the to-be-recommended driving policy is checked. If the quantity of execution times of the to-be-recommended driving policy is greater than or equal to the quantity threshold of recommendations corresponding to the to-be-recommended driving policy, the to-be-recommended driving policy "rest mode" is removed from the to-be-recommended policy library, and is moved to the normal policy library.

For the vehicle driving policy recommendation method and apparatus in this application, the to-be-recommended policy library is constructed, and a driving policy that has not been used or that has been used for a relatively small quantity of times is added as a to-be-recommended driving policy to the to-be-recommended policy library. Then, the environment information of the vehicle is collected to determine a possible driving scenario of the current vehicle, a corresponding to-be-recommended driving policy is determined based on the driving scenario, and the to-be-recommended driving policy is recommended to the user. The user may be reminded whether to enable the driving policy that has been used or that has been used for a relatively small quantity of times. In this manner, it can be ensured that after the driving policy is updated, the in-vehicle driving assistance system may "hand by hand" remind the user of an unfamiliar driving policy at least once, to ensure that the user can know a corresponding driving policy. This avoids a problem that some driving policies have never been used or have a low use rate when the user is unaware of the driving policies.

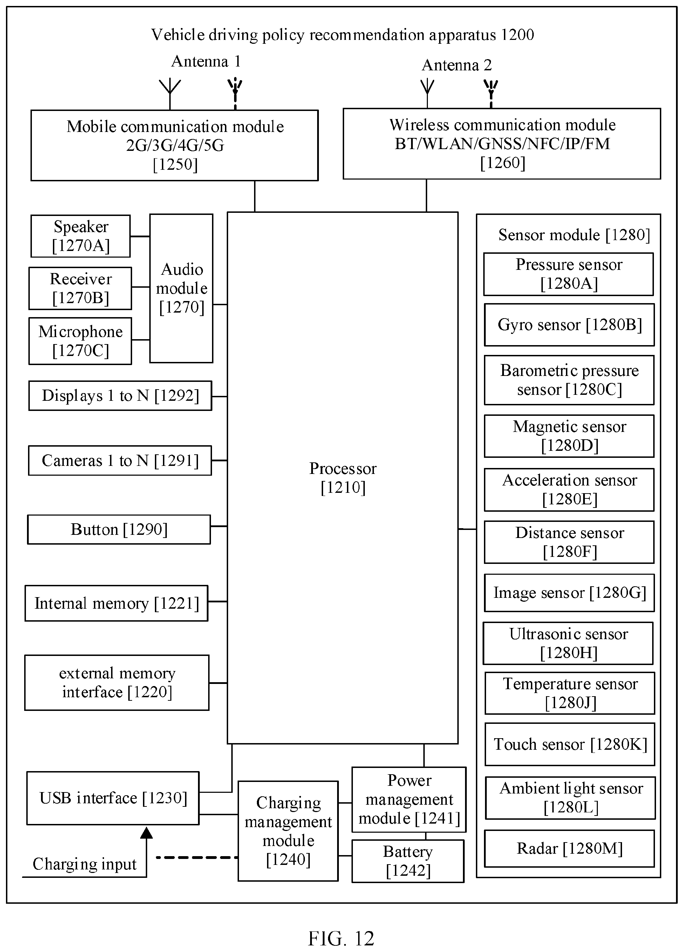

FIG. 12 is a schematic diagram of a vehicle driving policy recommendation apparatus according to an embodiment of this application.

As shown in FIG. 12, this application further provides a vehicle driving policy recommendation apparatus 1200. The apparatus 1200 may include: a processor 1210, an external memory interface 1220, an internal memory 1221, a universal serial bus (universal serial bus, USB) interface 1230, a charging management module 1240, a power management module 1241, a battery 1242, an antenna 1, an antenna 2, a mobile communication module 1250, a wireless communication module 1260, an audio module 1270, a speaker 1270A, a receiver 1270B, a microphone 1270C, a sensor module 1280, a button 1290, a camera 1291, a display 1292, and the like. The sensor module 1280 may include: a pressure sensor 1280A, a gyro sensor 1280B, a barometric pressure sensor 1280C, a magnetic sensor 1280D, an acceleration sensor 1280E, a distance sensor 1280F, an image sensor 1280G, an ultrasonic sensor 1280H, a temperature sensor 1280J, a touch sensor 1280K, an ambient light sensor 1280L, a radar 1280M, and the like. The radar 1280M may include a laser radar, a millimeter-wave radar, and the like.

It may be understood that the schematic structure in this embodiment of this application constitutes no specific limitation on the apparatus 1200. The apparatus 1200 may include more or fewer components than those shown in the figure, or some components may be combined, or some components may be split, or there may be a different component arrangement. The illustrated components may be implemented as hardware, software, or a combination of software and hardware.

The processor 1210 may be a processor of an architecture like an advanced reduced instruction set computing machine (advanced reduced instruction set computing machine, ARM), an X86, or a microprocessor without interlocked piped stages (microprocessor without interlocked piped stages, MIPS). The processor 1210 may include one or more processing units, for example, an application processor (application processor, AP), a modem processor, a GPU, an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated in one or more processors.

The controller may generate an operation control signal to accomplish control of a fetch instruction and an execution instruction based on instruction operation code and a timing signal.

A memory may also be disposed in the processor 1210 for storing instructions and data. In some embodiments, the memory in the processor 1210 is a cache memory. The memory may store instructions or data that has just been used or is recycled by the processor 1210. If the processor 1210 needs to use the instructions or data again, the processor 1210 may directly invoke the instructions or data from the memory. Repeated access is avoided, so that a waiting time of the processor 1210 is reduced, and therefore system efficiency is improved.

In some embodiments, the processor 1210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 1240 is configured to receive a charging input from a charger. The charger may be a wireless charger or a wired charger.

In some embodiments of wired charging, the charging management module 1240 may receive a charging input of a wired charger by using the USB interface 1230. In some embodiments of wireless charging, the charging management module 1240 may receive a wireless charging input by using a wireless charging coil of the apparatus 1200. While charging the battery 1242, the charging management module 1240 may further supply power to the apparatus 1200 by using the power management module 1241.

A wireless communication function of the apparatus 1200 may be implemented by using the antenna 1, the antenna 2, the mobile communication module 1250, the wireless communication module 1260, the modem processor, the baseband processor, and the like.

The mobile communication module 1250 may provide a solution, applied to the apparatus 1200, to wireless communication including 2G, 3G, 4G, 5G, 6G, and the like. The wireless communication module 1260 may provide a solution, applied to the apparatus 1200, to wireless communication including a wireless local area network (wireless local area network, WLAN), Bluetooth (Bluetooth, BT), a global navigation satellite system (global navigation satellite system, GNSS), frequency modulation (frequency modulation, FM), near field communication (near field communication, NFC), infrared (infrared, IR), and the like. The WLAN may be, for example, a wireless fidelity (wireless fidelity, Wi-Fi) network.

The apparatus 1200 implements a display function by using the GPU, the display 1292, the application processor, and the like. The GPU is a microprocessor for image processing, and is connected to the display 1292 and the application processor. The GPU is configured to: perform mathematical and geometric calculations, and render a graph. The processor 1210 may include one or more GPUs. The GPU executes program instructions to generate or change display information.

The display 1292 is configured to display an image, a video, and the like. The display 1292 includes a display panel. The display panel may use a liquid crystal display (liquid crystal display, LCD), an organic light-emitting diode (organic light-emitting diode, OLED), an active-matrix organic light-emitting diode or active-matrix organic light-emitting diode (active-matrix organic light-emitting diode, AMOLED), a flex light-emitting diode (flex light-emitting diode, FLED), a miniled, a microled, a micro-oled, a quantum dot light emitting diode (quantum dot light emitting diode, QLED), or the like. In some embodiments, the apparatus 1200 may include one or N displays 194, where N is a positive integer greater than 1.

The apparatus 1200 may implement a photographing function by using the ISP, the camera 1291, the video codec, the GPU, the display 1292, the application processor, and the like.

The camera 1291 is configured to capture a static image or a video. In some embodiments, the apparatus 1200 may include one or N cameras 1291, where N is a positive integer greater than 1.

The external memory interface 1220 may be configured to connect to an external memory card, for example, a micro SD card, to extend a storage capability of the apparatus 1200. The external memory card communicates with the processor 1210 by using the external memory interface 1220 to implement a data storage function. For example, a music file, a video, and a like file are stored in the external memory card.

The internal memory 1221 may be configured to store computer executable program code, and the executable program code includes instructions. The internal memory 1221 may include a program storage area and a data storage area. The program storage area may store an operating system, an application used for at least one function (for example, a sound play function, an image play function, and the like), and the like. The data storage area may store data (for example, audio data) and the like created when the apparatus 1200 is used. In addition, the internal memory 1221 may include a high-speed random access memory, and may also include a non-volatile memory, such as at least one disk storage device, flash memory device, universal flash storage (universal flash storage, UFS), and the like. By running the instructions stored in the internal memory 1221 and/or instructions stored in a memory that is disposed in the processor, the processor 1210 executes various functional applications and data processing of the apparatus 1200.

The apparatus 1200 may implement an audio function by using the audio module 1270, the speaker 1270A, the receiver 1270B, the microphone 1270C, the application processor, and the like. The audio function may be, for example, audio play and audio collection.

The speaker 1270A, also referred to as a "horn", is configured to convert an audio electrical signal into a sound signal. The microphone 1270C, also referred to as a "mike" or a "mic", is configured to convert a sound signal into an electrical signal.

The button 1290 includes a button in any possible form, for example, a mechanical button or a touch button. The apparatus 1200 may receive a button input, to determine a user instruction.

The apparatus 1200 provided in this application may implement any method described in FIG. 2 to FIG. 11. For a specific implementation, refer to corresponding descriptions in FIG. 2 to FIG. 11. Details are not described herein again.

In this application, a to-be-recommended policy library is preset. For example, during update, a to-be-recommended driving policy in an update package is added to the to-be-recommended policy library, or all driving policies are considered as to-be-recommended driving policies by default in an initial state and are added to the to-be-recommended policy library. In this way, a driving scenario can be recognized by collecting environment information including external environment data and internal environment data, and a corresponding to-be-recommended driving policy can be matched in the to-be-recommended policy library based on the recognized driving scenario. After the to-be-recommended driving policy is matched, the matched to-be-recommended driving policy is actively recommended to a user. In this way, in a manner of actively interacting with the user, it can be ensured that after a new driving policy is updated, an in-vehicle driving assistance system can ensure that the user is "hand by hand" reminded of the new driving policy at least once, and ensure that the user knows that a corresponding function is updated. In addition, the manner of actively interacting with the user to remind the user to use the new driving policy improves use experience of an autonomous vehicle, so that the user can fully experience a function of the autonomous vehicle.

Certainly, further, in this application, a to-be-recommended driving policy in the to-be-recommended policy library may be further moved out of the to-be-recommended policy library after the to-be-recommended driving policy is executed for a preset quantity of times. In addition, a same driving policy is updated again, and is re-scheduled to the to-be-recommended policy library. This ensures that the to-be-recommended policy library includes only a driving policy that the user is unfamiliar with or does not know.

A person of ordinary skill in the art should be further aware that units and algorithm steps in the examples described with reference to embodiments disclosed in this specification can be implemented by electronic hardware, computer software, or a combination of computer software and electronic hardware. To clearly illustrate interchangeability between hardware and software, various illustrative components and steps have been described above generally in terms of functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that all or some of the steps in the methods of the foregoing embodiments may be implemented by a program instructing a processor. The program may be stored in a computer-readable storage medium. The storage medium may be a non-transitory (English: non-transitory) medium, for example may be a random access memory, a read-only memory, a flash memory, a hard disk, a solid-state drive, a magnetic tape (English: magnetic tape), a floppy disk (English: floppy disk), an optical disc (English: optical disc), or any combination thereof.

The foregoing descriptions are merely preferable specific implementations of this application, but are not intended to limit the protection scope of this application. Therefore, the protection scope of this application shall be subject to the protection scope of the claims.

## Claims

1. A vehicle driving policy recommendation method, wherein the method is applied to a terminal device (002), and the method comprises:
collecting (S301) at least one piece of environment information;
determining (S302) at least one driving scenario based on the at least one piece of environment information, wherein the environment information comprises external environment data and/or internal environment data;
matching (S303) the at least one driving scenario with a to-be-recommended policy library, wherein the to-be-recommended policy library comprises a correspondence between a driving scenario and a to-be-recommended driving policy; and
when at least one to-be-recommended driving policy is matched, displaying (S304) the at least one to-be-recommended driving policy, to execute one or more displayed to-be-recommended driving policies according to a user instruction;
**characterized by**
removing the to-be-recommended driving policy executed at least once from the to-be-recommended policy library,
wherein after removal, an initial value of quantity of execution times of each to-be-recommended driving policy in the to-be-recommended policy library is zero.

2. The method according to claim 1, wherein before the collecting at least one piece of environment information, the method further comprises:
obtaining (S601) an update package, wherein the update package comprises a to-be-recommended driving policy and a driving scenario corresponding to the to-be-recommended driving policy; and
adding (S602) the to-be-recommended driving policy and the driving scenario corresponding to the to-be-recommended driving policy to the to-be-recommended policy library.

3. The method according to claim 1 or 2, wherein the to-be-recommended driving policy comprises priority information; and
the displaying the at least one to-be-recommended driving policy comprises:
displaying at least one to-be-recommended driving policy with a highest priority based on the priority information.

4. The method according to claim 3, wherein the driving scenario comprises a single driving scenario and a composite driving scenario, and a priority of a to-be-recommended driving policy that corresponds to the composite driving scenario is higher than a priority of a to-be-recommended driving policy that corresponds to the single driving scenario.

5. The method according to any one of claims 1 to 4, wherein the executing one or more displayed to-be-recommended driving policies according to a user instruction comprises:
if an execution conflict exists between a plurality of to-be-recommended driving policies, executing some to-be-recommended driving policies of the plurality of to-be-recommended driving policies according to the user instruction, wherein no execution conflict exists between the some executed to-be-recommended driving policies.

6. A vehicle driving policy recommendation apparatus (1200), wherein the apparatus (1200) is a terminal device (002), and the apparatus (1200) comprises:
a sensor (1280), configured to collect at least one piece of environment information;
a processor (1210), configured to: be coupled to a memory, and read and execute instructions stored in the memory, wherein
when run, the processor (1210) executes the instructions, so that the processor (1210) is configured to: determine at least one driving scenario based on the at least one piece of environment information, wherein the environment information comprises external environment data and/or internal environment data; match the at least one driving scenario with a to-be-recommended policy library, wherein the to-be-recommended policy library comprises a correspondence between a driving scenario and a to-be-recommended driving policy; when at least one to-be-recommended driving policy is matched, control a display to display the at least one to-be-recommended driving policy, to execute one or more displayed to-be-recommended driving policies according to a user instruction; and
**characterized in that**
when run, the processor (1210) executes the instructions, so that the processor (1210) is further configured to remove the to-be-recommended driving policy executed at least once from the to-be-recommended policy library, wherein after removal, an initial value of quantity of execution times of each to-be-recommended driving policy in the to-be-recommended policy library is zero.

7. The apparatus (1200) according to claim 6, wherein the apparatus (1200) further comprises: a receiver (1270B), configured to obtain an update package, wherein the update package comprises a to-be-recommended driving policy and a driving scenario corresponding to the to-be-recommended driving policy; and
the processor (1210) is further configured to add the to-be-recommended driving policy and the driving scenario corresponding to the to-be-recommended driving policy to the to-be-recommended policy library.

8. The apparatus (1200) according to claim 6 or 7, wherein the to-be-recommended driving policy comprises priority information; and
the processor (1210) is further configured to:
control, based on the priority information, the display to display at least one to-be-recommended driving policy with a highest priority.

9. The apparatus (1200) according to claim 8, wherein the driving scenario comprises a single driving scenario and a composite driving scenario, and a priority of a to-be-recommended driving policy that corresponds to the composite driving scenario is higher than a priority of a to-be-recommended driving policy that corresponds to the single driving scenario.

10. The apparatus (1200) according to any one of claims 6 to 9, wherein the receiver is further configured to: receive a user instruction; and
the processor (1210) is further configured to:
if an execution conflict exists between a plurality of to-be-recommended driving policies, execute some to-be-recommended driving policies of the plurality of to-be-recommended driving policies according to the user instruction, wherein no execution conflict exists between the some executed to-be-recommended driving policies.

11. A computer-readable storage medium, wherein the computer-readable storage medium stores instructions, and when the instructions are run on a terminal, the terminal is enabled to perform the method according to any one of claims 1 to 5.

## Patentansprüche

1. Fahrzeugfahrrichtlinienempfehlungsverfahren, wobei das Verfahren auf ein Endgerät (002) angewendet wird und das Verfahren umfasst:
Sammeln (S301) mindestens eines Umgebungsinformationselements;
Bestimmen (S302) mindestens eines Fahrszenarios basierend auf dem mindestens einen Umgebungsinformationselement, wobei die Umgebungsinformationen externe Umgebungsdaten und/oder interne Umgebungsdaten umfassen;
Abgleichen (S303) des mindestens einen Fahrszenarios mit einer Bibliothek von zu empfehlenden Richtlinien, wobei die Bibliothek von zu empfehlenden Richtlinien eine Entsprechung zwischen einem Fahrszenario und einer zu empfehlenden Fahrrichtlinie umfasst; und
wenn mindestens eine zu empfehlende Fahrrichtlinie abgeglichen wird, Anzeigen (S304) der mindestens einen zu empfehlenden Fahrrichtlinie, um eine oder mehrere angezeigte zu empfehlende Fahrrichtlinien gemäß einer Benutzeranweisung auszuführen;
**gekennzeichnet durch**
Entfernen der zu empfehlenden Fahrrichtlinie, die mindestens einmal ausgeführt wird, aus der Bibliothek von zu empfehlenden Richtlinien,
wobei nach einer Entfernung, ein Anfangswert einer Quantität von Ausführungszeiten jeder zu empfehlenden Fahrrichtlinie in der Bibliothek von zu empfehlenden Richtlinien null ist.

2. Verfahren nach Anspruch 1, wobei vor dem Sammeln mindestens eines Umgebungsinformationselements, das Verfahren ferner umfasst:
Erhalten (S601) eines Aktualisierungspakets, wobei das Aktualisierungspaket eine zu empfehlende Fahrrichtlinie und ein Fahrszenario, das der zu empfehlenden Fahrrichtlinie entspricht, umfasst; und
Hinzufügen (S602) der zu empfehlenden Fahrrichtlinie und des Fahrszenarios, das der zu empfehlenden Fahrrichtlinie entspricht, zu der Bibliothek von zu empfehlenden Richtlinien.

3. Verfahren nach Anspruch 1 oder 2, wobei die zu empfehlende Fahrrichtlinie Prioritätsinformationen umfasst; und
das Anzeigen der mindestens einen zu empfehlenden Fahrrichtlinie umfasst:
Anzeigen mindestens einer zu empfehlenden Fahrrichtlinie mit einer höchsten Priorität basierend auf den Prioritätsinformationen.

4. Verfahren nach Anspruch 3, wobei das Fahrszenario ein einzelnes Fahrszenario und ein zusammengesetztes Fahrszenario umfasst und eine Priorität einer zu empfehlenden Fahrrichtlinie, die dem zusammengesetzten Fahrszenario entspricht, höher als eine Priorität einer zu empfehlenden Fahrrichtlinie, die dem einzelnen Fahrszenario entspricht, ist.

5. Verfahren nach einem der Ansprüche 1 bis 4, wobei das Ausführen einer oder mehrerer angezeigter zu empfehlender Fahrrichtlinien gemäß einer Benutzeranweisung umfasst: falls ein Ausführungskonflikt zwischen einer Vielzahl von zu empfehlenden Fahrrichtlinien besteht, Ausführen einiger zu empfehlender Fahrrichtlinien der Vielzahl von zu empfehlenden Fahrrichtlinien gemäß der Benutzeranweisung, wobei kein Ausführungskonflikt zwischen den einigen ausgeführten zu empfehlenden Fahrrichtlinien besteht.

6. Fahrzeugfahrrichtlinienempfehlungseinrichtung (1200), wobei die Einrichtung (1200) ein Endgerät (002) ist und die Einrichtung (1200) umfasst:
einen Sensor (1280), der konfiguriert ist, um mindestens ein Umgebungsinformationselement zu sammeln;
einen Prozessor (1210), der konfiguriert ist, um: mit einem Speicher gekoppelt zu sein und Anweisungen, die in dem Speicher gespeichert sind, zu lesen und auszuführen, wobei wenn dieser abläuft, der Prozessor (1210) die Anweisungen ausführt, sodass der Prozessor (1210) konfiguriert ist, um: mindestens ein Fahrszenario basierend auf dem mindestens einen Umgebungsinformationselement zu bestimmen, wobei die Umgebungsinformationen externe Umgebungsdaten und/oder interne Umgebungsdaten umfassen; das mindestens eine Fahrszenario mit einer Bibliothek von zu empfehlenden Richtlinien abzugleichen, wobei die Bibliothek von zu empfehlenden Richtlinien eine Entsprechung zwischen einem Fahrszenario und einer zu empfehlenden Fahrrichtlinie umfasst; wenn mindestens eine zu empfehlende Fahrrichtlinie abgeglichen wird, eine Anzeige zu steuern, um die mindestens eine zu empfehlende Fahrrichtlinie anzuzeigen, um eine oder mehrere angezeigte zu empfehlende Fahrrichtlinien gemäß einer Benutzeranweisung auszuführen; und
**dadurch gekennzeichnet, dass**
wenn dieser abläuft, der Prozessor (1210) die Anweisungen ausführt, sodass der Prozessor (1210) ferner konfiguriert ist, um die zu empfehlende Fahrrichtlinie, die mindestens einmal ausgeführt wird, aus der Bibliothek von zu empfehlenden Richtlinien zu entfernen, wobei nach der Entfernung, ein Anfangswert der Quantität von Ausführungszeiten jeder zu empfehlenden Fahrrichtlinie in der Bibliothek von zu empfehlenden Richtlinien null ist.

7. Einrichtung (1200) nach Anspruch 6, wobei die Einrichtung (1200) ferner umfasst: einen Empfänger (1270B), der konfiguriert ist, um ein Aktualisierungspaket zu erhalten, wobei das Aktualisierungspaket eine zu empfehlende Fahrrichtlinie und ein Fahrszenario, das der zu empfehlenden Fahrrichtlinie entspricht, umfasst; und
der Prozessor (1210) ferner konfiguriert ist, um die zu empfehlende Fahrrichtlinie und das Fahrszenario, das der zu empfehlenden Fahrrichtlinie entspricht, zu der Bibliothek von zu empfehlenden Richtlinien hinzuzufügen.

8. Einrichtung (1200) nach Anspruch 6 oder 7, wobei die zu empfehlende Fahrrichtlinie Prioritätsinformationen umfasst; und
der Prozessor (1210) ferner konfiguriert ist, um:
basierend auf den Prioritätsinformationen, die Anzeige zu steuern, um mindestens eine zu empfehlende Fahrrichtlinie mit einer höchsten Priorität anzuzeigen.

9. Einrichtung (1200) nach Anspruch 8, wobei das Fahrszenario ein einzelnes Fahrszenario und ein zusammengesetztes Fahrszenario umfasst und eine Priorität einer zu empfehlenden Fahrrichtlinie, die dem zusammengesetzten Fahrszenario entspricht, höher als eine Priorität einer zu empfehlenden Fahrrichtlinie, die dem einzelnen Fahrszenario entspricht, ist.

10. Einrichtung (1200) nach einem der Ansprüche 6 bis 9, wobei der Empfänger ferner konfiguriert ist, um: eine Benutzeranweisung zu empfangen; und
der Prozessor (1210) ferner konfiguriert ist, um:
falls ein Ausführungskonflikt zwischen einer Vielzahl von zu empfehlenden Fahrrichtlinien besteht, einige zu empfehlende Fahrrichtlinien der Vielzahl von zu empfehlenden Fahrrichtlinien gemäß der Benutzeranweisung auszuführen, wobei kein Ausführungskonflikt zwischen den einigen ausgeführten zu empfehlenden Fahrrichtlinien besteht.

11. Computerlesbares Speichermedium, wobei das computerlesbare Speichermedium Anweisungen speichert und wenn die Anweisung auf einem Endgerät ablaufen, das Endgerät aktiviert wird, um das Verfahren nach einem der Ansprüche 1 bis 5 durchzuführen.

## Revendications

1. Procédé de recommandation de politique de conduite de véhicule, dans lequel le procédé est appliqué à un dispositif terminal (002), et le procédé comprend :
la collecte (S301) d'au moins un élément d'information d'environnement ;
la détermination (S302) d'au moins un scénario de conduite sur la base de l'au moins un élément d'information d'environnement, dans lequel les informations d'environnement comprennent des données d'environnement externe et/ou des données d'environnement interne ;
la mise en correspondance (S303) de l'au moins un scénario de conduite avec une bibliothèque de politiques à recommander, dans lequel la bibliothèque de politiques à recommander comprend une correspondance entre un scénario de conduite et une politique de conduite à recommander ; et
lorsqu'au moins une politique de conduite à recommander est mise en correspondance, l'affichage (S304) de l'au moins une politique de conduite à recommander, afin d'exécuter une ou plusieurs politiques de conduite à recommander affichées selon une instruction utilisateur ;
**caractérisé par**
la suppression de la politique de conduite à recommander exécutée au moins une fois de la bibliothèque de politiques à recommander,
dans lequel, après la suppression, une valeur initiale du nombre d'exécutions de chaque politique de conduite à recommander dans la bibliothèque de politiques à recommander est zéro.

2. Procédé selon la revendication 1, dans lequel avant la collecte de l'au moins un élément d'information d'environnement, le procédé comprend en outre :
l'obtention (S601) d'un paquet de mise à jour, dans lequel le paquet de mise à jour comprend une politique de conduite à recommander et un scénario de conduite correspondant à la politique de conduite à recommander ; et
l'ajout (S602) de la politique de conduite à recommander et du scénario de conduite correspondant à la politique de conduite à recommander à la bibliothèque de politiques à recommander.

3. Procédé selon la revendication 1 ou 2, dans lequel la politique de conduite à recommander comprend des informations de priorité ; et
l'affichage de l'au moins une politique de conduite à recommander comprend :
l'affichage d'au moins une politique de conduite à recommander avec une priorité la plus élevée sur la base des informations de priorité.

4. Procédé selon la revendication 3, dans lequel le scénario de conduite comprend un scénario de conduite unique et un scénario de conduite composite, et une priorité d'une politique de conduite à recommander qui correspond au scénario de conduite composite est plus élevée qu'une priorité d'une politique de conduite à recommander qui correspond au scénario de conduite unique.

5. Procédé selon l'une quelconque des revendications 1 à 4, dans lequel l'exécution d'une ou plusieurs politiques de conduite à recommander affichées selon une instruction utilisateur comprend :
s'il existe un conflit d'exécution entre une pluralité de politiques de conduite à recommander, l'exécution de certaines politiques de conduite à recommander parmi la pluralité de politiques de conduite à recommander selon l'instruction utilisateur, dans lequel aucun conflit d'exécution n'existe entre les certaines politiques de conduite à recommander exécutées.

6. Appareil de recommandation de politique de conduite de véhicule (1200), dans lequel l'appareil (1200) est un dispositif terminal (002), et l'appareil (1200) comprend :
un capteur (1280), configuré pour collecter au moins un élément d'information d'environnement ;
un processeur (1210), configuré pour : être couplé à une mémoire, et lire et exécuter des instructions stockées dans la mémoire, dans lequel
lorsqu'il est en cours d'exécution, le processeur (1210) exécute les instructions, de sorte que le processeur (1210) est configuré pour : déterminer au moins un scénario de conduite sur la base de l'au moins un élément d'information d'environnement, dans lequel les informations d'environnement comprennent des données d'environnement externe et/ou des données d'environnement interne ; mettre en correspondance l'au moins un scénario de conduite avec une bibliothèque de politiques à recommander, dans lequel la bibliothèque de politiques à recommander comprend une correspondance entre un scénario de conduite et une politique de conduite à recommander ; lorsqu'au moins une politique de conduite à recommander est mise en correspondance, commander un affichage pour afficher l'au moins une politique de conduite à recommander, pour exécuter une ou plusieurs politiques de conduite à recommander affichées selon une instruction utilisateur ; et
**caractérisé en ce que**
lorsqu'il est en cours d'exécution, le processeur (1210) exécute les instructions, de sorte que le processeur (1210) est en outre configuré pour supprimer la politique de conduite à recommander exécutée au moins une fois de la bibliothèque de politiques à recommander, dans lequel après la suppression, une valeur initiale du nombre d'exécution de chaque politique de conduite à recommander dans la bibliothèque de politiques à recommander est zéro.

7. Appareil (1200) selon la revendication 6, dans lequel l'appareil (1200) comprend en outre : un récepteur (1270B), configuré pour obtenir un paquet de mise à jour, dans lequel le paquet de mise à jour comprend une politique de conduite à recommander et un scénario de conduite correspondant à la politique de conduite à recommander ; et le processeur (1210) est en outre configuré pour ajouter la politique de conduite à recommander et le scénario de conduite correspondant à la politique de conduite à recommander à la bibliothèque de politiques à recommander.

8. Appareil (1200) selon la revendication 6 ou 7, dans lequel la politique de conduite à recommander comprend des informations de priorité ; et
le processeur (1210) est en outre configuré pour :
commander, sur la base des informations de priorité, l'affichage pour afficher au moins une politique de conduite à recommander avec une priorité la plus élevée.

9. Appareil (1200) selon la revendication 8, dans lequel le scénario de conduite comprend un scénario de conduite unique et un scénario de conduite composite, et une priorité d'une politique de conduite à recommander qui correspond au scénario de conduite composite est plus élevée qu'une priorité d'une politique de conduite à recommander qui correspond au scénario de conduite unique.

10. Appareil (1200) selon l'une quelconque des revendications 6 à 9, dans lequel le récepteur est en outre configuré pour : recevoir une instruction utilisateur ; et
le processeur (1210) est en outre configuré pour :
s'il existe un conflit d'exécution entre une pluralité de politiques de conduite à recommander, exécuter certaines politiques de conduite à recommander parmi la pluralité de politiques de conduite à recommander selon l'instruction utilisateur, dans lequel aucun conflit d'exécution n'existe entre les certaines politiques de conduite à recommander exécutées.

11. Support de stockage lisible par ordinateur, dans lequel le support de stockage lisible par ordinateur stocke des instructions, et lorsque les instructions sont exécutées sur un terminal, le terminal est en mesure d'effectuer le procédé selon l'une quelconque des revendications 1 à 5.
